# EUROPEAN PATENT APPLICATION

(11) **EP 4 530 772 A1**
(43) Date of publication of application: **02.04.2025**
(21) Application number: 24200524.7
(22) Date of filing: 16.09.2024
(51) Int. Cl.: G05B 19/4097

(54) **MACHINING TIME ESTIMATION DEVICE, MACHINING TIME ESTIMATION METHOD, AND MACHINING TIME ESTIMATION PROGRAM FOR LATHE HAVING OPPOSITE SPINDLE**

(30) Priority: 28.09.2023 JP 2023166699
(71) Applicant: Star Micronics Co., Ltd., Shizuoka-shi, Shizuoka 422-8654 (JP)
(72) Inventor: Ito, Manabu, Shizuoka-shi, Shizuoka (JP); Masuda, Mitsuhiro, Shizuoka-shi, Shizuoka (JP); Aoki, Tatsuya, Shizuoka-shi, Shizuoka (JP); Matsuyama, Eiji, Shizuoka-shi, Shizuoka (JP); Ozeki, Noriaki, Shizuoka-shi, Shizuoka (JP); Kamio, Masaru, Shizuoka-shi, Shizuoka (JP)
(74) Representative: Grünecker Patent- und Rechtsanwälte PartG mbB

(57) **Abstract**

Provided is a technique with which variation in an estimated machining time due to differences in an estimated machining direction can be eliminated appropriately in a lathe having an opposite spindle.

A machining direction determination unit determines a machining direction, i.e., whether to orient a product in a first direction along a material axis or a second direction opposite to the first direction, on the basis of constraint condition data indicating constraint conditions of front machining (first machining) and/or back machining (second machining), and product data. A time estimate output unit calculates a first time estimate required for the front machining and a second time estimate required for the back machining in accordance with the machining direction on the basis of machining condition data indicating machining conditions (including a machining speed) corresponding to tools used respectively for the front machining and the back machining, as well as material data and the product data, and outputs an estimate of a time required to manufacture the product on the basis of the first time estimate and the second time estimate.

## Description

### CROSS-REFERENCES

The application claims priority of Japanese Patent Application No. 2023-166699 filed on September 28, 2023. The contents of this application are incorporated herein by reference in their entirety.

### BACKGROUND OF THE INVENTION

### 1. Field of the Invention

The present invention relates to a machining time estimation device, a machining time estimation method, and a machining time estimation program for a lathe having an opposite spindle.

### 2. Description of the Related Art

A customer who is considering purchasing a numerical control (NC) lathe uses an estimate of the machining time in addition to whether a specific component can be machined using the lathe that the customer intends to purchase as a deciding factor when making the purchase. Furthermore, when a component machining manufacturer that owns the NC lathe receives a request for a component cost estimate from a customer, the manufacturer presents the cost estimate to the customer on the basis of the estimated machining time of the component. The machining time estimate is created manually by a technician having extensive knowledge of machining methods using lathes by determining a machining process and machining conditions that the technician believes, from past experience, to be most appropriate. Japanese Patent Application Publication No. 2002-189510 discloses a machining-related information generation device that generates tool path data from CAD data.

### SUMMARY OF THE INVENTION

In an opposed-spindle type lathe, the "machining direction", which indicates whether machining of a material is to be started from the left or the right surface relative to the product shape, or in other words the orientation of the product along a material axis, is determined by the technician on the basis of their own experience. Therefore, an estimation result of the machining direction differs according to the knowledge and experience of the technician, and as a result, variation also occurs in the machining time estimate. The aforementioned machining-related information generation device does not consider determination of the machining direction in an opposed-spindle type lathe.

The present invention discloses a technique with which variation in the estimated machining time due to differences in the estimated machining direction can be eliminated appropriately in a lathe having an opposite spindle.

A machining time estimation device of the present invention is a machining time estimation device for estimating a time required to manufacture a product using a lathe that performs first machining on a workpiece gripped by a first spindle about a material axis, and performs second machining on the workpiece on which the first machining has been performed and which is gripped by a second spindle that opposes the first spindle, the device including a material data input reception unit that receives input of material data indicating at least a shape of a material used for the workpiece, a product data input reception unit that receives input of product data indicating at least a shape of each area of the product obtained from the material, a machining direction determination unit that determines a machining direction, i.e., whether to orient the product in a first direction along the material axis or a second direction opposite to the first direction, on the basis of constraint condition data indicating constraint conditions of the first machining and/or the second machining, and the product data, and a time estimate output unit that calculates a first time estimate required for the first machining and a second time estimate required for the second machining in accordance with the machining direction on the basis of machining condition data indicating machining conditions including a machining speed, the machining conditions corresponding to tools used respectively for the first machining and the second machining, as well as the material data and the product data, and outputs a time estimate required to manufacture the product on the basis of the first time estimate and the second time estimate.

Further, a machining time estimation method of the present invention is a machining time estimation method for estimating a time required to manufacture a product using a lathe that performs first machining on a workpiece gripped by a first spindle about a material axis, and performs second machining on the workpiece on which the first machining has been performed and which is gripped by a second spindle that opposes the first spindle, the method including a material data input reception step for receiving input of material data indicating at least a shape of a material used for the workpiece, a product data input reception step for receiving input of product data indicating at least a shape of each area of the product obtained from the material, a machining direction determination step for determining a machining direction, i.e., whether to orient the product in a first direction along the material axis or a second direction opposite to the first direction, on the basis of constraint condition data indicating constraint conditions of the first machining and/or the second machining, and the product data, and a time estimate output step for calculating a first time estimate required for the first machining and a second time estimate required for the second machining in accordance with the machining direction on the basis of machining condition data indicating machining conditions including a machining speed, the machining conditions corresponding to tools used respectively for the first machining and the second machining, as well as the material data and the product data, and outputting a time estimate required to manufacture the product on the basis of the first time estimate and the second time estimate.

Furthermore, a machining time estimation program of the present invention is a machining time estimation program for estimating a time required to manufacture a product using a lathe that performs first machining on a workpiece gripped by a first spindle about a material axis, and performs second machining on the workpiece on which the first machining has been performed and which is gripped by a second spindle that opposes the first spindle, the program causing a computer to realize a material data input reception function for receiving input of material data indicating at least a shape of a material used for the workpiece, a product data input reception function for receiving input of product data indicating at least a shape of each area of the product obtained from the material, a machining direction determination function for determining a machining direction, i.e., whether to orient the product in a first direction along the material axis or a second direction opposite to the first direction, on the basis of constraint condition data indicating constraint conditions of the first machining and/or the second machining, and the product data, and a time estimate output function for calculating a first time estimate required for the first machining and a second time estimate required for the second machining in accordance with the machining direction on the basis of machining condition data indicating machining conditions including a machining speed, the machining conditions corresponding to tools used respectively for the first machining and the second machining, as well as the material data and the product data, and outputting a time estimate required to manufacture the product on the basis of the first time estimate and the second time estimate.

According to the present invention, it is possible to provide a technique with which variation in an estimated machining time due to differences in an estimated machining direction can be eliminated appropriately in a lathe having an opposite spindle.

### BRIEF DESCRIPTION OF THE DRAWINGS

FIG. 1 is a schematic view showing an example configuration of a lathe having an opposite spindle;
FIG. 2 is a schematic view showing examples of machining directions indicating the orientation of a product obtained from a material along a material axis;
FIG. 3 is a schematic block diagram showing an example configuration of a machining time estimation device;
FIG. 4 is a schematic block diagram showing an example configuration of an electric circuit of a server included in the machining time estimation device, an example configuration of a machining time estimation program, and an example of a data set;
FIG. 5 is a schematic view showing an example structure of product data;
FIG. 6 is a schematic view showing an example structure of constraint condition data;
FIG. 7 is a schematic view showing an example structure of machining condition data;
FIG. 8 is a schematic flowchart showing an example of machining time estimation processing;
FIGS. 9A and 9B are schematic views showing an example of determining the machining direction;
FIG. 10 is a schematic view showing an example of determining the machining direction when there are no constraints on machining; and
FIG. 11 is a schematic view showing an example of a written machining time estimate.

### DESCRIPTION OF THE PREFERRED EMBODIMENTS

An embodiment of the present invention will be described below. Needless to mention, the following embodiment merely illustrates an example of the present invention, and not all of the features illustrated by the embodiment are essential to solving the problem of the invention.

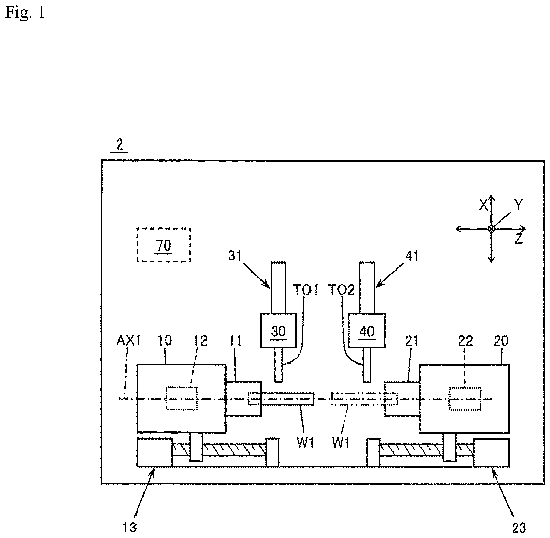

(1) Outline of technology included in the present invention: First, referring to examples shown in FIGS. 1 to 11, an outline of the technology included in the present invention will be described. Note that since the figures of the present application are schematic diagrams illustrating examples, the magnifications of the directions shown in the figures may be different, and the figures may not be consistent. Needless to mention, the elements of the present technology are not limited to the specific examples denoted by reference symbols. Furthermore, in the present application, a numerical value range "Min to Max" denotes a range no lower than a minimum value Min and no higher than a maximum value Max.

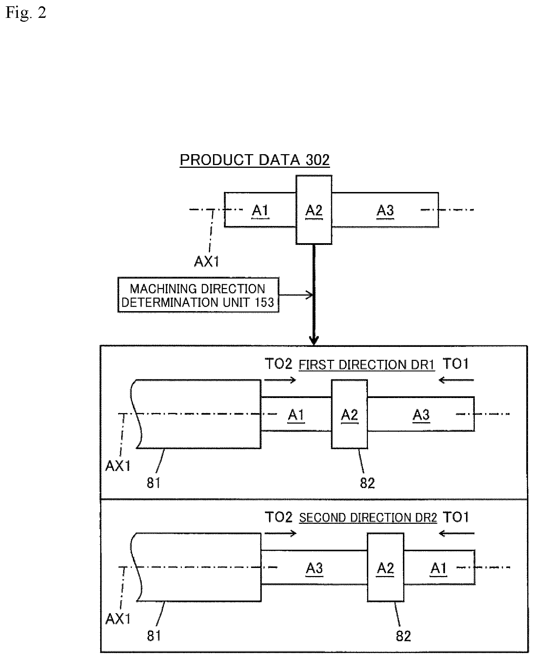

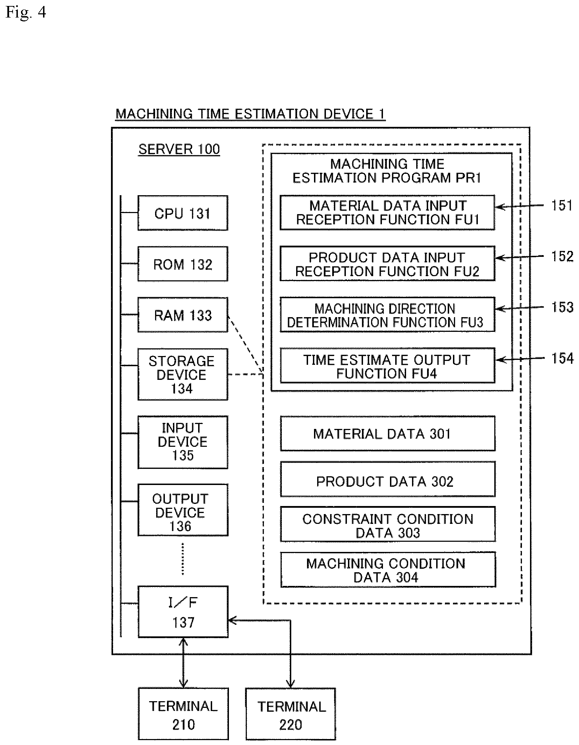

[Aspect 1] As shown in FIG. 1 and so on, a machining time estimation device 1 according to an aspect of this technology estimates a time required to manufacture a product 82 using a lathe 2 that performs first machining (front machining, for example) on a workpiece W1 gripped by a first spindle (a front spindle 11, for example) about a material axis AX1, and performs second machining (back machining, for example) on the workpiece W1 on which the first machining has been performed and which is gripped by a second spindle (a back spindle 21, for example) that opposes the first spindle (11). As shown in FIG. 4, the machining time estimation device 1 includes a material data input reception unit 151, a product data input reception unit 152, a machining direction determination unit 153, and a time estimate output unit 154. The material data input reception unit 151 receives input of material data 301 indicating at least a shape of a material 81 used for the workpiece W1. The product data input reception unit 152 receives input of product data 302 indicating at least a shape of each area (areas A1 to A3, for example) of the product 82 obtained from the material 81. The machining direction determination unit 153, as shown in FIGS. 2, 8 to 10, and so on, determines a machining direction, i.e., whether to orient the product 82 in a first direction DR1 along the material axis AX1 or a second direction DR2 opposite to the first direction DR1, on the basis of constraint condition data 303 indicating constraint conditions of the first machining and/or the second machining, and the product data 302. The time estimate output unit 154 calculates a first time estimate TT1 required for the first machining and a second time estimate TT2 required for the second machining in accordance with the machining direction on the basis of machining condition data 304 indicating machining conditions including a machining speed, the machining conditions corresponding to tools (tools TO1 and TO2, for example) used respectively for the first machining and the second machining, as well as the material data 301 and the product data 302. The time estimate output unit 154 outputs an estimate of the time required to manufacture the product 82 on the basis of the first time estimate TT1 and the second time estimate TT2.

In aspect 1 described above, first, the machining direction indicating the direction in which the product 82 is to be oriented along the material axis AX1 is determined automatically. The estimates (TT1 and TT2) of the times required for the first machining and the second machining are calculated automatically in accordance with the machining direction, whereupon an estimate of the time required to manufacture the product 82 is output on the basis of these time estimates (TT1 and TT2). Hence, according to aspect 1 described above, it is possible to provide a machining time estimation device with which variation in the estimated machining time due to differences in the estimated machining direction can be eliminated appropriately in a lathe having an opposite spindle.

In the aspect described above, various examples may be considered. For example, the first spindle may be capable of moving in a material axis direction along the material axis, or may be incapable of moving in the material axis direction. The second spindle may also be capable of moving in the material axis direction or incapable of moving in the material axis direction. The lathe may include a guide bush that supports the workpiece projecting from the first spindle. The machining time estimation device may be constituted by a server computer and one or more terminals, or by a single computer. The shape of the material is a concept including the size of the material. Further, the material data may include material property data indicating material properties of the material, and so on, in addition to the data indicating the shape of the material. When the material data are data indicating at least the shape and the material properties of the material, the estimate of the time required for the machining can be calculated in accordance with preferred machining conditions taking the material properties of the material into account. The shape of the product is a concept including the size of the product. The material data and the product data may be integrated data. A case in which the machining time estimation device 1 includes the material data input reception unit 151 and the product data input reception unit 152 also includes a case where the machining time estimation device 1 includes a shape data input reception unit that receives input of integrated shape data including both the material data 301 and the product data 302. The terms "first" and "second" in the present application are used to distinguish between constituent elements included in two constituent elements having similarities, and do not refer to a sequence. The above statements also apply to the following aspects.

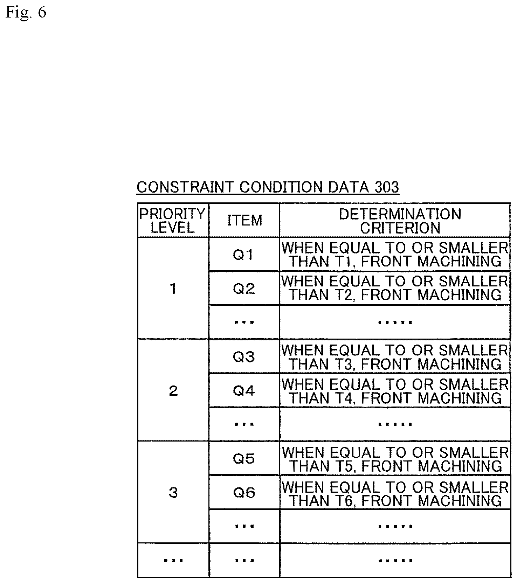

[Aspect 2] As shown in FIG. 6, the machining direction determination unit 153 may determine the machining direction on the basis of the constraint condition data 303 indicating the constraint conditions, which include a priority condition prioritizing either the first machining or the second machining, and the product data 302, so as to satisfy the priority condition. In the above case, the machining direction is determined so as to satisfy the priority condition, and it is therefore possible to provide a favorable example of machining direction estimation.

[Aspect 3] The product data input reception unit 152 may receive input of the product data 302 including a machining accuracy. The machining direction determination unit 153 may determine the machining direction on the basis of the constraint condition data 303 indicating the constraint conditions, which include the priority condition prioritizing the first machining with respect to the machining accuracy, and the product data 302, so as to satisfy the machining accuracy. In the above case, the machining direction is determined so as to satisfy a condition prioritizing the first machining with respect to the machining accuracy, and it is therefore possible to provide an even more favorable example of machining direction estimation.

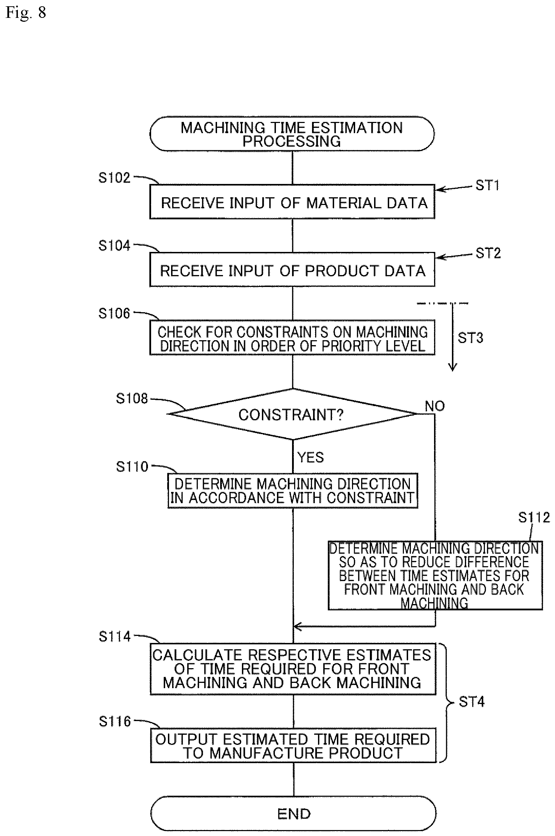

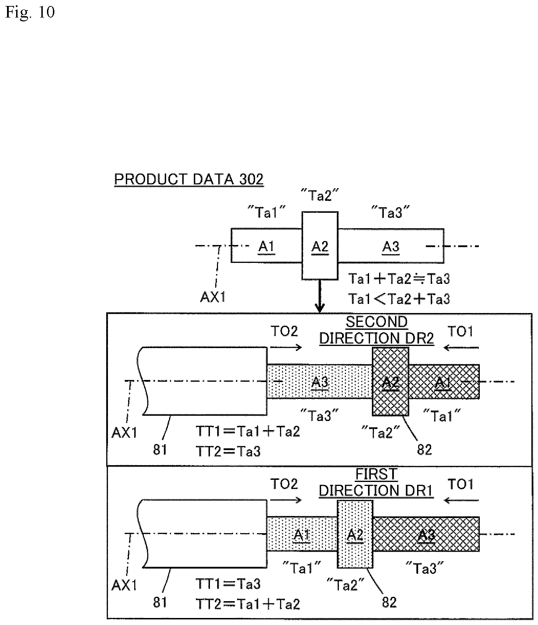

[Aspect 4] As shown in FIGS. 8 and 10, when the product data 302 do not include data indicating that the product 82 is to be oriented in either the first direction DR1 or the second direction DR2, either the first machining or the second machining may be allocated to each area so as to reduce a difference between the first time estimate TT1 and the second time estimate TT2. According to this aspect, it is possible to provide a favorable example of machining time estimation in a case where are no constraints on the machining direction.

[Aspect 5] Incidentally, a machining time estimation method according to an aspect of the present technology is a machining time estimation method for estimating the time required to manufacture the product 82 using the lathe 2 that performs the first machining on the workpiece W1 gripped by the first spindle (11) about the material axis AX1, and performs the second machining on the workpiece W1 on which the first machining has been performed and which is gripped by the second spindle (21) that opposes the first spindle (11), and as shown in FIG. 8, the method includes the following steps. (a1) A material data input reception step ST1 for receiving input of the material data 301 indicating at least the shape of the material 81 used for the workpiece W1. (a2) A product data input reception step ST2 for receiving input of the product data 302 indicating at least the shape of each area of the product 82 obtained from the material 81. (a3) A machining direction determination step ST3 for determining the machining direction, i.e., whether to orient the product 82 in the first direction DR1 along the material axis AX1 or the second direction DR2 opposite to the first direction DR1, on the basis of the constraint condition data 303 indicating the constraint conditions of the first machining and/or the second machining, and the product data 302. (a4) A time estimate output step ST4 for calculating the first time estimate TT1 required for the first machining and the second time estimate TT2 required for the second machining in accordance with the machining direction on the basis of the machining condition data 304 indicating the machining conditions including the machining speed, the machining conditions corresponding to the tools used respectively for the first machining and the second machining, as well as the material data 301 and the product data 302, and outputting an estimate of the time required to manufacture the product 82 on the basis of the first time estimate TT1 and the second time estimate TT2.

According to aspect 5 described above, it is possible to provide a machining time estimation method with which variation in the estimated machining time due to differences in the estimated machining direction can be eliminated appropriately in a lathe having an opposite spindle.

[Aspect 6] Furthermore, a machining time estimation program PR1 according to an aspect of the present technology, as shown in FIG. 4, causes a computer (a server 100, for example) to realize a material data input reception function FU1 corresponding to the material data input reception unit 151, a product data input reception function FU2 corresponding to the product data input reception unit 152, a machining direction determination function FU3 corresponding to the machining direction determination unit 153, and a time estimate output function FU4 corresponding to the time estimate output unit 154. According to this aspect, it is possible to provide a machining time estimation program with which variation in the estimated machining time due to differences in the estimated machining direction can be eliminated appropriately in a lathe having an opposite spindle.

In addition, the present technology can be applied to a system including the machining time estimation device described above, a machining time estimation method for this system, a computer-readable, non-temporary medium on which the machining time estimation program described above is recorded, and so on. The machining time estimation device may be formed from a plurality of discrete parts.

(2) Example of lathe having opposite spindle: FIG. 1 schematically shows an example configuration of a lathe having an opposite spindle. The lathe 2 shown in FIG. 1 is an opposed-spindle type numerical control (NC) automatic lathe having an NC apparatus 70 that numerically controls machining of the workpiece W1. Control axes of the lathe 2 shown in FIG. 1 include an X-axis, indicated by "X", a Y-axis, indicated by "Y", and a Z-axis, indicated by "Z". A Z-axis direction is a horizontal direction extending along the material axis AX1, which is a spindle axis that serves as the rotation center of the workpiece W1. The material axis AX1 is the center axis of the material used for the workpiece W1. An X-axis direction is a vertical direction orthogonal to the Z-axis. A Y-axis direction is a horizontal direction orthogonal to the Z-axis. Note that as long as the Z-axis and the X-axis intersect, these two axes need not be orthogonal, as long as the Z-axis and Y-axis intersect, these two axes need not be orthogonal, and as long as the X-axis and the Y-axis intersect, these two axes need not be orthogonal. Furthermore, the figures referred to in the present specification merely illustrate examples used to describe the present technology, and the present technology is not limited thereby. Moreover, descriptions of positional relationships between respective parts are merely examples. Accordingly, the present technology also includes examples in which left and right are reversed, the rotation direction is reversed, and so on. In addition, equality of directions, positions, and so on is not limited to strict coincidence and includes deviation from strict coincidence due to errors.

The lathe 2 shown in FIG. 1 includes a front headstock 10, a front headstock driving unit 13, a back headstock 20, a back headstock driving unit 23, a first tool post 30, a first tool post driving unit 31, a second tool post 40, a second tool post driving unit 41, the NC apparatus 70, and so on. The front spindle 11, which grips the workpiece W1 in a releasable manner about the material axis AX1, and a motor 12 (for example, a built-in motor) for rotating the front spindle 11 about the material axis AX1 are incorporated into the front headstock 10. The back spindle 21, which grips the workpiece W1 in a releasable manner about the material axis AX1, and a motor 22 (for example, a built-in motor) for rotating the back spindle 21 about the material axis AX1 are incorporated into the back headstock 20. The back spindle 21 is an opposite spindle that opposes the front spindle 11 along the material axis AX1. In this specific example, the front spindle 11 is an example of the first spindle, and the back spindle 21 is an example of the second spindle.

The lathe 2 shown in FIG. 1 is a moving spindle-type lathe in which the front headstock 10 and the back headstock 20 both move in the Z-axis direction. The front headstock driving unit 13 moves the front headstock 10 in at least the Z-axis direction in response to a command from the NC apparatus 70. The back headstock driving unit 23 moves the back headstock 20 in at least the Z-axis direction in response to a command from the NC apparatus 70. The back headstock driving unit 23 may move the back headstock 20 in at least one of the X-axis direction and the Y-axis direction in order to discharge a product formed from the workpiece W1. Note that the lathe 2 may be a fixed spindle-type lathe in which the front headstock 10 does not move, or a lathe in which the front headstock 10 moves but the back headstock 20 does not move.

The tool TO1, which is used to perform at least front machining on the workpiece W1 gripped by the front spindle 11, is attached to the first tool post 30. The tool TO2, which is used to perform at least back machining on the workpiece W1 gripped by the back spindle 21, is attached to the second tool post 40. The first tool post 30 and the second tool post 40 may be gang-type tool posts, turret tool posts, or the like. In this specific example, front machining is an example of the first machining and back machining is an example of the second machining. The first tool post driving unit 31 moves the first tool post 30 in the X-axis direction and the Y-axis direction, for example, in response to a command from the NC apparatus 70. The second tool post driving unit 41 moves the second tool post 40 in the X-axis direction and the Y-axis direction, for example, in response to a command from the NC apparatus 70.

When a long material is used as the workpiece W1, the workpiece W1 may be supplied to the front spindle 11 from a rear end (the left end in FIG. 1) of the front spindle 11. In this case, a guide bush for supporting the workpiece W1 so as to be capable of sliding in the Z-axis direction may be disposed on a front side (the right side in FIG. 1) of the front spindle 11. When a short material is used as the workpiece W1, the workpiece W1 may be supplied to the front spindle 11 from a front end of the front spindle 11. A rod-shaped material, the rod shape including a columnar shape, a tubular shape, a prismatic shape, and so on, can be used as the material. The lathe 2 performs front machining by cutting the workpiece W1 gripped by the front spindle 11 about the material axis AX1 using the tool TO1. Following front machining, the workpiece W1 is passed from the front spindle 11 to the back spindle 21 and back-machined so as to form a product. When the material is long, the lathe performs back machining by gripping the front-machined workpiece W1 gripped by the front spindle 11 with the back spindle 21, separating the front-machined workpiece W1 from the front spindle 11 with a cut-off tool attached to the first tool post 30, for example, and cutting the front-machined workpiece W1 gripped by the back spindle 21 with the tool TO2. The lathe 2 shown in FIG. 2 is capable of performing front machining and back machining simultaneously in parallel.

(3) Description of machining direction: Next, referring to FIG. 2, the "machining direction", indicating the direction along the material axis in which the product is oriented, will be described. FIG. 2 schematically shows an envisaged case in which the product 82 is formed from the long material 81 in accordance with the product data 302 indicating at least the shape of each area of the product 82 obtained from the material 81. The product data 302 shown in FIG. 2 indicate the shape of the product 82 along the material axis AX1 in order of an area A1 having a comparatively small outer diameter, an area A2 having a comparatively large outer diameter, and an area A3 having a comparatively small outer diameter. In this case, methods for manufacturing the product 82 using the lathe 2 include a method in which the product 82 is formed in the first direction DR1, in which the area A3, the area A2, and the area A1 are arranged in that order from the tip end of the material 81 toward a supply source, and a method in which the product 82 is formed in the second direction DR2, in which the areas A1 to A3 are arranged in the opposite order. When the product 82 is formed in the first direction DR1, normally, front machining is performed using the front-machining tool TO1 from the area A3, whereupon back machining is performed using the back-machining tool TO2 from the area A1. When the product 82 is formed in the second direction DR2, normally, front machining is performed using the front-machining tool TO1 from the area A1, whereupon back machining is performed using the back-machining tool TO2 from the area A3. As long as there are no constraints on either front machining or back machining, the cycle time of workpiece machining can be minimized by apportioning machining of the areas A1 to A3 so that the time required for the front machining and the time required for the back machining are aligned as closely as possible.

However, the front machining and/or the back machining may be constrained by the shape, geometric tolerance, dimensional tolerance, and so on of the product 82. The reason for this is that the numbers of tools that can be attached to the front-machining tool post and the back-machining tool post differ from each other, the types of machining that can be performed in the front machining and the back machining differ from each other, and the machining accuracy differs between the front side and the back side due to differences in rigidity and so on. The machining capacity of a lathe is often greater during front machining than during back machining. In this case, it may be possible to allocate front machining to areas of the product 82 having complicated shapes or areas requiring high machining accuracy, and to allocate back machining to the remaining areas. Moreover, when the workpiece W1 is transferred from the front spindle 11 to the back spindle 21, the position in which the back spindle 21 grips the workpiece W1 may shift slightly, and as a result, the accuracy of the back machining may be lower than the accuracy of the front machining.

When the machining time, including the machining direction, is estimated by a person, technical experience is required. Therefore, the machining time, including the machining direction, is estimated by a technician. For example, a customer intending to purchase an NC lathe uses, as deciding factors when making the purchase, whether the NC lathe can be used to manufacture a specific component and an estimation result of the machining time. The customer selects the manufacturer and model by comparing machining time estimates from a plurality of lathe manufacturers. Further, when a component machining manufacturer receives a request for a component cost estimate from a customer, the manufacturer calculates the estimated cost of the component by estimating the time required for machining using an NC lathe owned thereby and adding necessary expenses such as material cost and labor cost, and presents the estimated cost to the customer.

When creating a written machining time estimate, the technician determines a machining process and machining conditions that the technician believes, from past experience, to be optimal, and calculates a machining time estimate manually. During determination of the machining process, however, the determination result of the machining process may differ according to the knowledge and experience of the technician, and the determination of the machining direction may also differ. When the determination of the machining direction differs, variation also occurs in the estimate of the machining time. Furthermore, the work time taken by the technician to create the written machining time estimate is also dependent on the knowledge and experience of the technician, and personal differences are likely to occur. Moreover, an amount of time in units of several years is required to train personnel capable of creating a written machining time estimate. In addition, in the manufacturing industry, there is a serious shortage of technical personnel due to aging and turnover, and therefore there are also insufficient man-hours to create written machining time estimates. As a result, in terms of quality, the quality of estimates provided to customers may decline, in terms of cost, the time required for estimation work may increase, and in terms of delivery time, the delivery time for responses may become longer. These problems may lead to lost business and damaged trust.

In this specific example, the machining direction determination unit 153 determines the machining direction, i.e., whether to orient the product 82 in the first direction DR1 along the material axis AX1 or the second direction DR2 opposite to the first direction DR1, on the basis of the product data 302 and so on. Thus, variation in the estimated machining time due to differences in the estimated machining direction can be eliminated appropriately in the lathe 2 having an opposite spindle. In this specific example, estimating the machining direction includes determining the point up to which machining is to be performed on the front side.

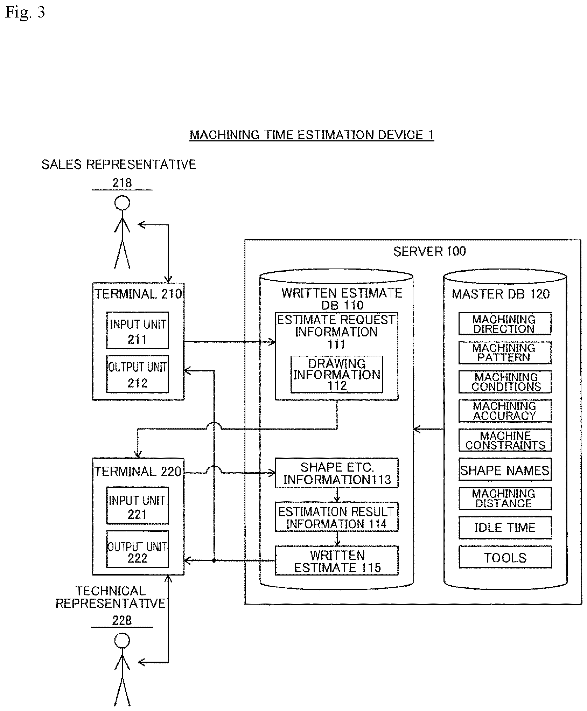

(4) Specific example of machining time estimation device: FIG. 3 schematically shows an example configuration of a machining time estimation device. FIG. 4 schematically shows an example configuration of an electric circuit of a server (a server computer) for realizing the machining time estimation device 1 shown in FIG. 3, an example configuration of a machining time estimation program, and an example of a data set. The machining time estimation device 1 shown in FIG. 3 includes the server 100, one or more terminals 210 for a sales representative 218, and one or more terminals 220 for a technical representative 228. The server 100 includes a written estimate database (written estimate DB) 110 and a master database (master DB) 120. The terminals 210 and 220 may be connected to the server 100 by a network connection such as the Internet or an intranet. The terminal 210 is a computer including an input unit 211 such as a keyboard or a pointing device, an output unit 212 such as a display, a communication interface for communicating with the server 100, and so on. The terminal 220 is a computer including an input unit 221 such as a keyboard or a pointing device, an output unit 222 such as a display, a communication interface for communicating with the server 100, and so on.

The written estimate DB 110 stores estimate request information 111 input by the sales representative 218, for example, shape etc. information 113 input by the technical representative 228, for example, estimation result information 114 generated from the shape etc. information 113, and written estimates 115 generated from the estimation result information 114. The estimate request information 111 includes the material data 301 (see FIG. 4) indicating at least the shape of the material 81 used for the workpiece W1, drawing information 112, which is digital information of drawings (paper drawings, for example) indicating a product presented by the customer, and so on. For example, the sales representative 218 can digitize paper drawings presented by the customer using image acquiring means such as a scanner or a camera and transmit the drawing information 112 together with the other estimate request information 111 from the terminal 210 to the server 100. The server 100 transmits the estimate request information 111 including the drawing information 112 to the terminal 220. The technical representative 228 can view the estimate request information 111 received by the terminal 220, and having looked at the drawing information 112 can transmit the shape etc. information 113 indicating at least the shape of each area of the product 82 from the terminal 220 to the server 100. The server 100 generates the estimation result information 114 on the basis of the estimate request information 111, the shape etc. information 113, and information stored in the master DB, generates a digital written estimate 115 in accordance with the estimation result information 114, and transmits the written estimate 115 to the terminal 220. The technical representative 228 can view the written estimate 115 received by the terminal 220, and having determined that the written estimate 115 may be passed to the sales representative 218, issues a request to the server 100 to transmit the written estimate 115 to the terminal 210. When the server 100 transmits the written estimate 115 to the terminal 210, the sales representative 218 can view the written estimate 115 received by the terminal 210, and can present the written estimate 115 to the customer.

The master DB 120 stores information indicating determination criteria for determining the machining direction, information indicating a machining pattern, information indicating machining conditions corresponding to the respective tools, information indicating the machining accuracy, information indicating machine constraints, information indicating shape names, information indicating machining distances, information indicating criteria for determining idle time, information indicating tool types, and so on. This information is used to generate the estimation result information 114 and so on.

As shown in FIG. 4, the server 100 includes a central processing unit (CPU) 131, a read only memory (ROM) 132, a random access memory (RAM) 133, a storage device 134, an input device 135, an output device 136, an interface (I/F) 137, and so on. These elements (131 to 137) are electrically connected and configured to be capable of inputting and outputting information into and from each other. The server 100 may include all of the constituent elements in a single housing, or may be constituted by a plurality of separate devices capable of mutual communication.

The storage device 134 stores the machining time estimation program PR1, the material data 301, the product data 302, the constraint condition data 303, the machining condition data 304, and so on. A magnetic storage device such as a hard disk, a nonvolatile semiconductor memory such as a flash memory, or the like can be used as the storage device 134. The CPU 131, which is a processor, performs various processing by reading the information stored in the storage device 134 to the RAM 133, which is a semiconductor memory, as appropriate and executing the read program. A keyboard, a pointing device, or the like can be used as the input device 135. A display, a printer, or the like can be used as the output device 136. The I/F 137 inputs and outputs information into and from the terminals 210 and 220, and so on.

The machining time estimation program PR1 causes the server 100 to realize the material data input reception function FU1, the product data input reception function FU2, the machining direction determination function FU3, and the time estimate output function FU4. The CPU 131 performs processing corresponding to these functions (FU1 to FU4) by executing the machining time estimation program PR1 read to the RAM 133. The machining time estimation program PR1 may be said to cause the server 100 to function as the material data input reception unit 151, the product data input reception unit 152, the machining direction determination unit 153, and the time estimate output unit 154. A computer-readable, non-temporary medium storing the machining time estimation program PR1 is not limited to the storage device inside the server 100, and may be an external recording medium outside the server 100. The server 100 can realize the aforesaid functions (FU1 to FU4) itself by reading the machining time estimation program PR1 from the external recording medium.

The material data 301 may be any data indicating at least the shape (including the size) of the material 81 used for the workpiece W1. Accordingly, the material data 301 indicates at least the shape of the material 81. The shape of the material 81 may be columnar, tubular, prismatic, and so on. The material data 301 includes size data indicating the size of the material 81 in accordance with the shape of the material 81. The size data denote, for example, the outer diameter of a columnar material, the outer diameter and inner diameter of a tubular material, and so on. The material data 301 may also include material property data indicating material properties (rigidity, for example) of the material 81, and so on. The material data 301 are assumed to be included in the estimate request information 111 shown in FIG. 3, but the material data 301 may be input from the terminal 220 for the technical representative 228 separately from the estimate request information 111 and stored in the written estimate DB 110.

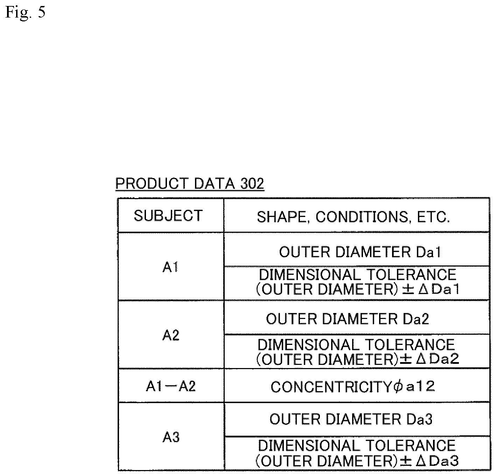

The product data 302 may be any data indicating at least the shape (including the size) of each area of the product 82 obtained from the material 81. Accordingly, the product data 302 indicates at least the shape of each area of the product 82. The shape of each area may be a columnar shape indicated by an outer diameter, a tubular shape indicated by an inner diameter, a cone shape, a truncated cone shape, a prismatic shape, a pyramid shape, a truncated pyramid shape, and so on. The product data 302 may also include data indicating shape-related conditions, such as machining accuracy data indicating the machining accuracy, such as the dimensional tolerance of the areas and the geometric tolerance of or between the areas. The geometric tolerance includes shape tolerance, such as the roundness and tubularity of an area, attitude tolerance, such as the perpendicularity between areas, positional tolerance, such as the concentricity between areas, and so on. The product data 302 correspond to the shape etc. information 113 shown in FIG. 3. FIG. 5 schematically shows an example structure of the product data 302. In FIG. 5, an outer diameter Da1 is specified as the shape of the area A1, and a dimensional tolerance (outer diameter) of -ΔDa1 to +ΔDa1 is specified as the machining accuracy (a condition) of the area A1. A concentricity ϕa12 is specified as the machining accuracy between the areas A1 and A2.

The constraint condition data 303 indicate constraint conditions of front machining and/or back machining. The constraint conditions may include a priority condition prioritizing either front machining or back machining. FIG. 6 schematically shows an example structure of the constraint condition data 303. The constraint condition data 303 shown in FIG. 6 show constraint conditions including a priority condition prioritizing front machining with respect to the machining accuracy. The constraint condition data 303 include a plurality of items Q1, Q2, ... for determining the machining direction, and a determination criterion is associated with each item. In FIG. 6, the determination criterion relating to the item Q1 is that front machining is prioritized when a specified numerical value of the machining accuracy is equal to or smaller than a threshold T1, and the determination criterion relating to the item Q2 is that front machining is prioritized when the specified numerical value of the machining accuracy is equal to or smaller than a threshold T2. A priority level is allocated to each item. The number given to the priority level becomes smaller as the priority level increases, and there may be a plurality of items having the same priority level. In FIG. 6, a priority level 1 is allocated to the items Q 1 and Q2, a priority level 2 is allocated to items Q3 and Q4, and a priority level 3 is allocated to items Q5 and Q6. For example, it is assumed that the item Q1 is the concentricity and the item Q3 is the dimensional tolerance (outer diameter). When the concentricity is equal to or smaller than the threshold T1 (when the determination criterion is satisfied), the machining direction determination unit 153 determines the machining direction by prioritizing the determination relating to the concentricity over the determination relating to the dimensional tolerance (outer diameter). When the determination result relating to the concentricity is the first direction DR1 and the determination result relating to the dimensional tolerance (outer diameter) is the second direction DR2, the first direction DR1 is determined as the machining direction. When the concentricity is either larger than the threshold T1 or not specified and an absolute value of the dimensional tolerance (outer diameter) is equal to or smaller than a threshold T3 (when the determination criterion is satisfied), the machining direction determination unit 153 determines the machining direction by prioritizing the determination relating to the dimensional tolerance (outer diameter).

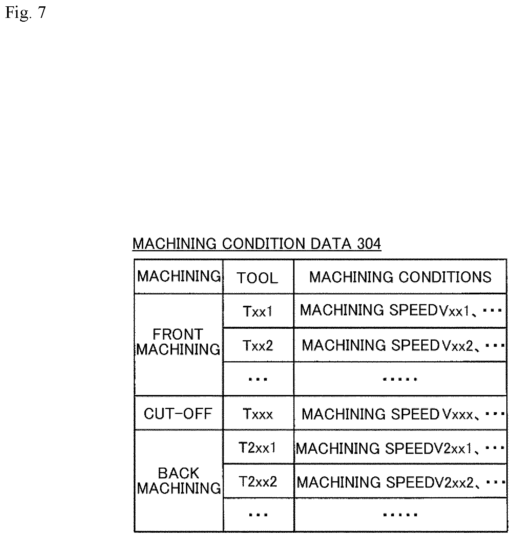

The machining condition data 304 indicate machining conditions corresponding to the respective tools used for front machining and back machining. The machining conditions include the machining speed, and may differ according to the characteristics of the material 81. FIG. 7 schematically shows an example structure of the machining condition data 304. In FIG. 7, the front-machining tools TO1 include "Txx1", "Txx2", ..., and the back-machining tools TO2 include "T2xx1", "T2xx2", .... When the material 81 is long, a cut-off tool "Txxx" is included in the machining condition data 304. For the purpose of estimating the machining time, it is assumed that cut-off machining is not included in either front machining or back machining. In FIG. 7, a machining speed Vxx1 and so on are associated with the tool "Txx1" as machining conditions, and a machining speed V2xx1 and so on are associated with the tool "T2xx1" as machining conditions.

FIG. 8 schematically shows an example of machining time estimation processing performed by the server 100 shown in FIGS. 3 and 4. The machining time estimation processing will be described below with reference to FIGS. 1 to 7. In FIG. 8, step S102 corresponds to the material data input reception step ST1, the material data input reception unit 151, and the material data input reception function FU1. Step S104 corresponds to the product data input reception step ST2, the product data input reception unit 152, and the product data input reception function FU2. Steps S106 to S112 correspond to the machining direction determination step ST3, the machining direction determination unit 153, and the machining direction determination function FU3. Steps S114 to S116 correspond to the time estimate output step ST4, the time estimate output unit 154, and the time estimate output function FU4. In certain cases hereinafter, the word "step" will be omitted and the reference symbol of the step will be shown in parentheses.

The server 100, upon reception of a registration request for a machining time estimate from the terminal 210 for the sales representative 218, receives input of the estimate request information 111, including the material data 301 and the drawing information 112, from the terminal 210 (S102). For example, the server 100 displays on the terminal 210 an estimate request input screen having a request button and an input field for inputting the estimate request information 111 including the material data 301 and the drawing information 112, and receives input of the estimate request information 111 into the input field from the terminal 210 until the request button is pressed. The input field for the material data 301 includes a field for selecting the shape of the material 81 and a field for inputting the size of the material 81, and may also include a field for inputting the material properties of the material 81 and so on. Accordingly, the server 100 may receive input of the shape (including the size) of the material 81, input of the material properties of the material 81, and so on in the input field for the material data 301. The drawing information 112 may be image data obtained by digitizing paper drawings using image acquiring means, computer aided design (CAD) data, or the like. When the request button is pressed, the server 100 stores the received estimate request information 111 in the written estimate DB 110 and transmits the estimate request information 111 including the material data 301 and the drawing information 112 to the terminal 220 for the technical representative 228. The technical representative 228, having viewed the estimate request information 111 on the terminal 220, registers the shape etc. information 113 in the written estimate DB 110 through the terminal 220. As described above, the shape etc. information 113 corresponds to the product data 302 indicating the shape and so on of each area of the product 82 obtained from the material 81. When the estimate request information 111 does not include the material data 301, the server 100 receives input of the material data 301 from the terminal 220 for the technical representative 228.

Upon reception of a request to register the shape etc. information 113 from the terminal 220 for the technical representative 228, the server 100 receives input of the product data 302, including the machining accuracy, from the terminal 220 (S104). For example, the server 100 displays on the terminal 220 a product data input screen having a calculate button and an input field for inputting the product data 302, and receives input of the product data 302 into the input field from the terminal 220 until the calculate button is pressed. The input field for the product data 302 includes a field for selecting the shape of each area of the product 82 and a field for inputting the size of each area, and may also include a field for inputting shape-related conditions (the machining accuracy, for example) and so on. Accordingly, the server 100 may receive input of the shape (including the size) of each area of the product 82, input of the shape-related conditions, and so on in the input field for the product data 302. When the calculate button is pressed, the server 100 stores the received product data 302 in the written estimate DB 110 as the shape etc. information 113 and then advances the processing to S106. Thus, the technical representative 228 can cause the server 100 to create a written machining time estimate including the machining direction, the machining process, and the machining time simply by pressing the calculate button displayed on the terminal 220.

In S106, the server 100 checks, on the basis of the constraint condition data 303 and the product data 302, whether there are any constraints on the machining direction in order of the priority levels in the constraint condition data 303. The server 100 branches the processing depending on whether or not there are any constraints (S108). When there is a constraint on one of the priority levels 1, 2, 3, ..., the server 100 determines the machining direction in accordance with the constraint (S110). When there are no constraints on any of the priority levels, the server 100 determines the machining direction so as to reduce the difference between the time estimates of the front machining and the back machining (S112).

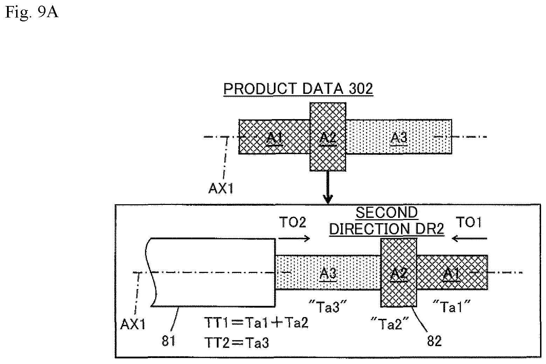

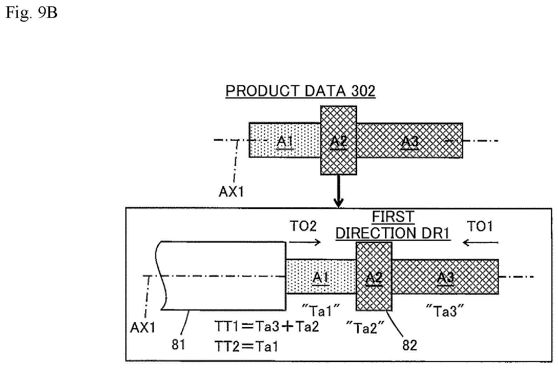

First, an example of the machining direction determination processing of S110 will be described. It is assumed, for example, that in the constraint condition data 303 shown in FIG. 6, the concentricity has priority level 1, and in the product data 302 shown in FIGS. 2 and 5, the concentricity ϕa12 between the areas A1 and A2 is equal to or smaller than the threshold T1 of the constraint condition data 303. In this case, the server 100 determines, in accordance with the constraint condition data 303, that there is a constraint on the concentricity ϕa12 having priority level 1, and therefore allocates front machining to the areas A1 and A2. If there are no constraints on the area A3, the server 100 allocates front machining and back machining to the product data 302 in the manner shown in FIG. 9A so as to determine the second direction DR2 as the machining direction. Furthermore, it is assumed that in the product data 302, the concentricity (set at (pa23) between the areas A2 and A3 is equal to or smaller than the threshold T1. In this case, the server 100 determines, in accordance with the constraint condition data 303, that there is a constraint on the concentricity ϕa23 having priority level 1, and therefore allocates front machining to the areas A2 and A3. If there is no constraint on the area A1, the server 100 allocates front machining and back machining to the product data 302 in the manner shown in FIG. 9B so as to determine the first direction DR1 as the machining direction.

Moreover, it is assumed that in the constraint condition data 303, the dimensional tolerance (outer diameter) has priority level 2, the product data 302 do not specify whether the concentricity ϕa12 is larger than the threshold T1, and the absolute value of the dimensional tolerance (outer diameter) ΔDa1 of the area A1 is equal to or smaller than the threshold T3 of the constraint condition data 303. In this case, the server 100 determines, in accordance with the constraint condition data 303, that there is no constraint on the item having priority level 1 but there is a constraint on the dimensional tolerance (outer diameter) ΔDa1 having priority level 2. If there are no constraints on the area A3, the server 100 allocates front machining and back machining to the product data 302 in the manner shown in FIG. 9A, for example, so as to determine the second direction DR2 as the machining direction. Furthermore, it is assumed that in the product data 302, the absolute values of dimensional tolerances (outer diameter) ΔDa2 and ΔDa3 of the areas A2 and A3 are equal to or smaller than the threshold T3. In this case, the server 100 determines, in accordance with the constraint condition data 303, that there is a constraint on the dimensional tolerances (outer diameter) ΔDa2 and ΔDa3 having priority level 2, and therefore allocates front machining to the areas A2 and A3. If there is no constraint on the area A1, the server 100 allocates front machining and back machining to the product data 302 in the manner shown in FIG. 9B so as to determine the first direction DR1 as the machining direction.

In the example described above, the machining direction determination unit 153 determines the machining direction, i.e., whether to orient the product 82 in the first direction DR1 or the second direction DR2, on the basis of the constraint condition data 303 and the product data 302, so as to satisfy the machining accuracy serving as the priority condition.

Next, an example of the machining direction determination processing of S112 will be described. The processing of S112 is performed when the product data 302 do not include data indicating that the product 82 is to be oriented in either the first direction DR1 or the second direction DR2. In this case, first, the server 100 calculates an estimate of the time required for the machining for each area (the areas A1 to A3, for example) of the product 82 on the basis of the machining condition data 304, the material data 301, and the product data 302. For example, the server 100 may calculate, for each of the areas indicated by the product data 302, the time required when machining is performed at the machining speed indicated in the machining condition data 304. The distance to be machined may be calculated from the material data 301 and the product data 302 as a depth to be cut from the material 81 or the like, or may be calculated from the product data 302 without using the material data 301 as a distance to move the tool along the material axis AX1. When the machining speed is constant, the estimate of the time required for the machining is a value obtained by dividing the machining length of the area by the machining speed. In an example shown in FIG. 10, an estimate of the time required to machine the area A1 is Ta1, an estimate of the time required to machine the area A2 is Ta2, and an estimate of the time required to machine the area A3 is Ta3. Next, the server 100 allocates either front machining or back machining to each area so as to reduce the difference between the first time estimate TT1 required for the front machining and the second time estimate TT2 required for the back machining.

As shown by the example in FIG. 10, an estimate Ta1+Ta2 of the total time required to machine the areas A1 and A2 is substantially equal to the estimate Ta3 of the time required to machine the area A3, and therefore Ta1 < Ta2+Ta3. In other words, a difference between the total time estimate Ta1+Ta2 and the time estimate Ta3 is smaller than a difference between a total time estimate Ta3+Ta2 and the time estimate Ta1. In this case, the server 100 allocates one type of machining, among front machining and back machining, to the areas A1 and A2, and allocates the other type of machining to the area A3. Having allocated front machining to the areas A1 and A2, the server 100 determines the second direction DR2 as the machining direction, and having allocated back machining to the areas A1 and A2, the server 100 determines the first direction DR1 as the machining direction. For example, in a case where the determination criterion is set such that front machining is allocated to the longer area A3 of the areas A1 and A3 at the ends in the direction of the material axis AX1, the server 100 determines the first direction DR1 as the machining direction.

Here, it is assumed that i is a variable identifying a set of one or more areas that can be allocated to one type of machining, among front machining and back machining, T1i is a time estimate for the set i, and T2i is a time estimate for a set of one or more areas that can be allocated to the other type of machining. The server 100 may perform processing to allocate the set in which |T1i-T2i| is smallest, among the sets i, to one type of machining, among front machining and back machining. For example, whether to allocate the set i to front machining or back machining may be determined in accordance with a predetermined determination criterion such as allocating the set i to front machining when an end area included in the set i is longer than an end area not included in the set i. As described above, the machining direction is determined by allocating either front machining or back machining to each area so as to reduce the difference between the first time estimate TT1 required for the front machining and the second time estimate TT2 required for the back machining.

Following the machining direction determination processing of S110 or S112, the server 100 calculates the first time estimate TT1 required for the front machining and the second time estimate TT2 required for the back machining on the basis of the machining condition data 304, the material data 301, and the product data 302 and in accordance with the determined machining direction (S114). First, the server 100 calculate estimates of the time required to machine the respective areas (the areas A1 to A3, for example) of the product 82 on the basis of the machining condition data 304, the material data 301, and the product data 302. This calculation is performed as described in the machining direction determination processing of S112. Needless to mention, when the machining direction determination processing of S112 is performed, calculation of the time estimate of each area can be omitted. Likewise in the examples shown in FIGS. 9A and 9B, the estimates of the times required to machine the areas A1, A2, and A3 are shown respectively as Ta1, Ta2, and Ta3. Next, the server 100 calculates the first time estimate TT1 required to perform front machining on the one or more areas to which front machining has been allocated, and the second time estimate TT2 required to perform back machining on the one or more areas to which back machining has been allocated. In the example shown in FIG. 9A, the first time estimate TT1 is Ta1+Ta2, and the second time estimate TT2 is Ta3. In the example shown in FIG. 9B, the first time estimate TT1 is Ta3+Ta2, and the second time estimate TT2 is Ta1.

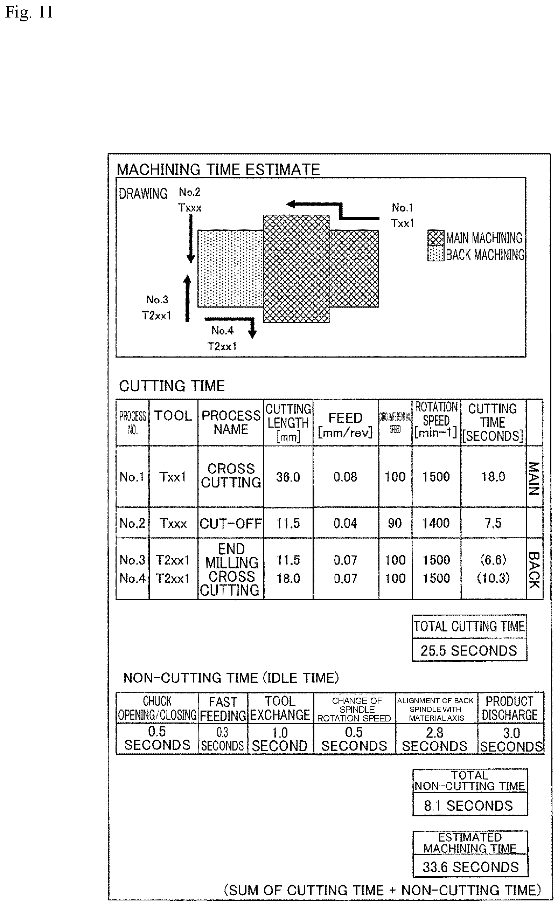

After calculating the respective time estimates (TT1 and TT2), the server 100 outputs an estimate (set as TT) of the time required to manufacture the product 82 on the basis of the first time estimate TT1 and the second time estimate TT2 (S116). For example, the server 100 generates a written machining time estimate (the written estimate 115 shown in FIG. 3) including the time estimate TT, as shown in FIG. 11, and outputs the written machining time estimate to the terminals 210 and 220. An example of calculation of the time estimate TT will now be described with reference to the written machining time estimate shown in FIG. 11.

The written machining time estimate shown in FIG. 11 includes a drawing of the product 82 in an upper section, a list of cutting times of each process in a middle section, and a list of non-cutting times (idle times) in a lower section. FIG. 11 shows that the cutting time for front cross cutting is 18.0 seconds, the cutting time for cut-off machining is 7.5 seconds, the cutting time for back end milling is 6.6 seconds, and the cutting time for back cross cutting is 10.3 seconds. Accordingly, the first time estimate TT1 required for the front machining is 18.0 seconds, the second time estimate TT2 required for the back machining is 6.6 + 10.3 = 16.9 seconds, and the estimate of the time required for the cut-off machining is 7.5 seconds. Since the front machining and the back machining can be executed simultaneously in parallel, the cutting times of the back machining, which ends more quickly than the front machining, are shown in parentheses on the written machining time estimate. A cutting time combining the front machining, the cut-off machining, and the back machining is therefore a cutting time of 25.5 seconds, which is obtained by adding the cutting time 7.5 seconds of the cut-off machining to the cutting time 18.0 seconds of the front machining.

One cycle of workpiece machining also includes operations performed at non-cutting times. The non-cutting times include time for opening and closing chucks (not shown) of the front spindle 11 and the back spindle 21, time for fast-feeding the tools TO1 and TO2, time for exchanging the tools TO1 and TO2, time for changing the rotation speeds of the front spindle 11 and the back spindle 21, time for aligning the back spindle 21 with the material axis AX1, time for discharging the product 82 from the back spindle 21, and so on. These non-cutting times are stored in the master DB 120 shown in FIG. 3 as information indicating criteria for determining the idle time. Hence, the server 100 determines the respective non-cutting times by referring to the information indicating the criteria for determining the idle time, and indicates the determined non-cutting times on the written machining time estimate. FIG. 11 shows that the sum of the non-cutting times is 8.1 seconds. The time estimate TT required to manufacture the product 82 is therefore 33.6 seconds, which is obtained by adding the non-cutting time 8.1 seconds to the cutting time 25.5 seconds combining the front machining, the cut-off machining, and the back machining.

The technical representative 228 can determine whether or not the written machining time estimate (115) may be passed to the sales representative 218 by viewing the digital written machining time estimate (115) transmitted from the server 100 on the terminal 220. When the technical representative 228 issues a request to the server 100 to transmit the written machining time estimate (115) to the terminal 210 for the sales representative 218, the server 100 transmits the written machining time estimate (115) to the terminal 210. Thus, the sales representative 218 can view the written machining time estimate (115) on the terminal 210 and present the written machining time estimate (115) to the customer. Note that the technical representative 228 may transmit a request to correct the written machining time estimate (115) to the server 100 from the terminal 220. In this case, the server 100 may perform the machining time estimation processing shown in FIG. 8 again for the technical representative 228. The technical representative 228 can ask the server 100 to create a new written machining time estimate (115) by changing the product data 302 or the material data 301. The machining time estimation processing shown in FIG. 8 is thus completed.

According to the above, the technical representative 228 need not have knowledge and experience of machining using an NC lathe and methods for operating an NC lathe, and need not know information about the tools and material characteristics to be used. With the machining time estimation device 1, there is no need to generate a tool path and no need to set or register detailed conditions relating to tools and jigs in advance, and therefore the calculation load is also light. Hence, in terms of quality, the estimate content can be standardized. Furthermore, in terms of quality and cost, a written machining time estimate can be created in a short amount of time even by a person other than a technician having thorough knowledge of machining methods. For example, the sales representative who created the request, despite not having technical knowledge of machining, can create a written machining time estimate automatically by directly inputting the product data 302 into the machining time estimation device 1. Moreover, in terms of cost and delivery time, almost all of the work time is spent inputting the shape of the product 82, and since there is no need to generate a tool path, calculations can be completed quickly, enabling a large reduction in the work time required to create a written machining time estimate.

In the specific example described above, first, the machining direction, which is important in terms of the constraints on the machining accuracy and so on in the lathe 2 having the back spindle 21, is determined automatically. The estimates (TT1 and TT2) of the times required for front machining and back machining are then calculated automatically in accordance with the machining direction, whereupon the time estimate TT required to manufacture the product 82 is output on the basis of the time estimates (TT1 and TT2). Thus, the machining time estimation device 1 is capable of appropriately eliminating variation in the estimated machining time due to differences in the estimated machining direction in the lathe 2 having the back spindle 21. More specifically, with the machining time estimation device 1, it is possible to appropriately eliminate variation in the estimated machining time due to differences in the determination of the point up to which machining is to be implemented on the front side.

(5) Modified examples: Various modified examples may be considered in the present invention. When the material 81 is short such that cut-off machining is not performed, the cutting time of the workpiece W1 is the cutting time required for the longer of the front machining and the back machining, and therefore a time obtained by adding the non-cutting time to the longer cutting time serves as the time estimate TT required to manufacture the product 82.

The constraint conditions may include a priority condition prioritizing one of front machining and back machining rather than the machining accuracy. For example, when a rotary tool for drilling a hole in a side surface of the workpiece W1 is only provided on the first tool post 30 used for front machining, a determination criterion according to which front machining is performed may be associated with an item relating to side surface drilling in the constraint condition data 303. Furthermore, the constraint conditions may include a priority condition prioritizing back machining either in addition to the priority condition prioritizing front machining or instead of the priority condition prioritizing front machining. For example, when a rotary tool for drilling a hole in the side surface of the workpiece W1 is only provided on the second tool post 40 used for back machining, a determination criterion according to which back machining is performed may be associated with the item relating to side surface drilling in the constraint condition data 303.

In the machining time estimation device 1 shown in FIG. 3, when the technical representative 228 receives a request for the written estimate 115 from a customer, the technical representative 228 may input the material data 301 and the product data 302 into the terminal 220 and issue a request to the server 100 to create the written estimate 115. Needless to mention, when a sales representative 218 having enough technical ability to be able to understand the content of drawings receives a request for the written estimate 115 from a customer, the sales representative 218 may input the material data 301 and the product data 302 into the terminal 210 and issue a request to the server 100 to create the written estimate 115 even without having knowledge of machining using an NC lathe.

Furthermore, the technical representative 228, having received a request for the written estimate 115 from a customer, may issue a request to the server 100 to create the written estimate 115 by directly inputting the material data 301 and the product data 302 into the server 100, without using a terminal. The server 100 shown in FIG. 4 is capable of receiving input of the material data 301 and the product data 302 into the input device 135, and capable of outputting the written estimate 115 from the output device 136 by display, printing, or the like. Needless to mention, in order to output the written estimate 115, the server 100 determines the machining direction and creates the written estimate 115 including the time estimate TT in accordance with the machining direction. Thus, the server 100 alone can correspond to the machining time estimation device 1.

When the constraint conditions indicated by the constraint condition data 303 inevitably result in a constraint by which at least one of the areas of the product 82 is restricted to front machining or back machining, the processing of S108 and S112 need not be performed in the machining time estimation processing shown in FIG. 8. For example, a case may be envisaged in which the item of the constraint condition data 303 that has the lowest priority level is the area in which the machining distance is greatest, and front machining is set as the determination criterion for this item, or the like.

(6) Conclusion: According to the present invention, as described above, it is possible, through various aspects, to provide technology with which variation in an estimated machining time due to differences in an estimated machining direction can be eliminated appropriately in a lathe having an opposite spindle, and so on. Needless to mention, the basic actions and effects described above are likewise obtained with technology constituted only by the constituent features pertaining to the independent claims. Moreover, configurations obtained by replacing the configurations disclosed in the above examples with each other or changing the combinations thereof, configurations obtained by replacing the configurations disclosed in the prior art and the above examples with each other or changing the combinations thereof, and so on may also be implemented. The present invention also includes these configurations and so on.

## Claims

1. A machining time estimation device for estimating a time required to manufacture a product using a lathe that performs first machining on a workpiece gripped by a first spindle about a material axis, and performs second machining on the workpiece on which the first machining has been performed and which is gripped by a second spindle that opposes the first spindle, the machining time estimation device comprising:
a material data input reception unit that receives input of material data indicating at least a shape of a material used for the workpiece;
a product data input reception unit that receives input of product data indicating at least a shape of each area of the product obtained from the material;
a machining direction determination unit that determines a machining direction, i.e., whether to orient the product in a first direction along the material axis or a second direction opposite to the first direction, on the basis of constraint condition data indicating constraint conditions of the first machining and/or the second machining, and the product data; and
a time estimate output unit that calculates a first time estimate required for the first machining and a second time estimate required for the second machining in accordance with the machining direction on the basis of machining condition data indicating machining conditions including a machining speed, the machining conditions corresponding to tools used respectively for the first machining and the second machining, as well as the material data and the product data, and outputs an estimate of the time required to manufacture the product on the basis of the first time estimate and the second time estimate.

2. The machining time estimation device according to claim 1, wherein the machining direction determination unit determines the machining direction on the basis of the constraint condition data indicating the constraint conditions, which include a priority condition prioritizing either the first machining or the second machining, and the product data, so as to satisfy the priority condition.

3. The machining time estimation device according to claim 2, wherein
the product data input reception unit receives input of the product data including a machining accuracy, and
the machining direction determination unit determines the machining direction on the basis of the constraint condition data indicating the constraint conditions, which include the priority condition prioritizing the first machining with respect to the machining accuracy, and the product data, so as to satisfy the priority condition.

4. The machining time estimation device according to any one of claims 1 to 3, wherein, when the product data do not include data indicating that the product is to be oriented in either the first direction or the second direction, the machining direction determination unit allocates either the first machining or the second machining to each area so as to reduce a difference between the first time estimate and the second time estimate.

5. A machining time estimation method for estimating a time required to manufacture a product using a lathe that performs first machining on a workpiece gripped by a first spindle about a material axis, and performs second machining on the workpiece on which the first machining has been performed and which is gripped by a second spindle that opposes the first spindle, the machining time estimation method comprising:
a material data input reception step for receiving input of material data indicating at least a shape of a material used for the workpiece;
a product data input reception step for receiving input of product data indicating at least a shape of each area of the product obtained from the material;
a machining direction determination step for determining a machining direction, i.e., whether to orient the product in a first direction along the material axis or a second direction opposite to the first direction, on the basis of constraint condition data indicating constraint conditions of the first machining and/or the second machining, and the product data; and
a time estimate output step for calculating a first time estimate required for the first machining and a second time estimate required for the second machining in accordance with the machining direction on the basis of machining condition data indicating machining conditions including a machining speed, the machining conditions corresponding to tools used respectively for the first machining and the second machining, as well as the material data and the product data, and outputting an estimate of the time required to manufacture the product on the basis of the first time estimate and the second time estimate.

6. A machining time estimation program for estimating a time required to manufacture a product using a lathe that performs first machining on a workpiece gripped by a first spindle about a material axis, and performs second machining on the workpiece on which the first machining has been performed and which is gripped by a second spindle that opposes the first spindle, the machining time estimation program causing a computer to realize:
a material data input reception function for receiving input of material data indicating at least a shape of a material used for the workpiece;
a product data input reception function for receiving input of product data indicating at least a shape of each area of the product obtained from the material;
a machining direction determination function for determining a machining direction, i.e., whether to orient the product in a first direction along the material axis or a second direction opposite to the first direction, on the basis of constraint condition data indicating constraint conditions of the first machining and/or the second machining, and the product data; and
a time estimate output function for calculating a first time estimate required for the first machining and a second time estimate required for the second machining in accordance with the machining direction on the basis of machining condition data indicating machining conditions including a machining speed, the machining conditions corresponding to tools used respectively for the first machining and the second machining, as well as the material data and the product data, and outputting an estimate of the time required to manufacture the product on the basis of the first time estimate and the second time estimate.
